Europäisches Patentamt

(19) European Patent Office

Office européen des brevets

(11) Veröffentlichungsnummer: **0 243 375**
**B1**

(12) **EUROPÄISCHE PATENTSCHRIFT**

(45) Veröffentlichungstag der Patentschrift: **08.08.90**

(51) Int. Cl.⁵: **G 01 N 21/33**

(21) Anmeldenummer: **86902340.8**

(22) Anmeldetag: **23.04.86**

(86) Internationale Anmeldenummer:
**PCT/DE86/00173**

(87) Internationale Veröffentlichungsnummer:
**WO 87/02772 07.05.87 Gazette 87/10**

(54) **VERFAHREN UND VORRICHTUNG ZUR KONZENTRATIONSBESTIMMUNG.**

(30) Priorität: **22.10.85 DE 3537482**

(43) Veröffentlichungstag der Anmeldung:
**04.11.87 Patentblatt 87/45**

(45) Bekanntmachung des Hinweises auf die
Patenterteilung:
**08.08.90 Patentblatt 90/32**

(84) Benannte Vertragsstaaten:
**DE FR GB IT**

(56) Entgegenhaltungen:
**Analytical Chemistry, Band 55, Nr. 9, August
1983, Columbus, Ohio (US) R. Müller et al.:
"Generation of formaldehyde in test
atmospheres" Seiten 1440- 1442**

**Technisches Messen, Band 50, Nr. 11,
November 1983, München (DE) M. Zöhnbauer:
"Erweiterte Anwendungsmöglichkeiten des UV-
Betriebsphotometers RADAS", Seiten 417-422**

(73) Patentinhaber: **Deutsche Forschungsanstalt für
Luft- und Raumfahrt e.V.
Linder Höhe Postfach 90 60 58
D-5000 Köln 90 (DE)**

(72) Erfinder: **KRAUSS, Lutz
Hohenzollernstrasse 82
D-7031 Sindelfingen (DE)**

(74) Vertreter: **Hoeger, Stellrecht & Partner
Uhlandstrasse 14 c
D-7000 Stuttgart 1 (DE)**

Courier Press, Leamington Spa, England.

**Beschreibung**

Die Erfindung betrifft ein Verfahren zur Bestimmung der Konzentration von Formaldehyd.

Des weiteren betrifft die Erfindung eine Vorrichtung zur Durchführung des Verfahrens.

Bei der Bestimmung der Konzentration eines bekannten Stoffes in einem Medium mittels Absorptionsspektroskopie stellt sich, vor allem wenn diese Bestimmung sehr genau sein soll, das Problem, daß in dem Medium weitere Stoffe vorhanden sind, welche selbst im Bereich der charakteristischen Absorptionsbanden des zu untersuchenden Stoffes absorbieren, so daß eine Konzentrationsbestimmung aufgrund einer einfachen Absorptionsmessung im Spektralbereich einer charakteristischen Absorptionsbande des Stoffes keine brauchbaren Ergebnisse liefert. Es kann beispielsweise im einen Fall nur der Stoff vorliegen, so daß aufgrund der Absorptionsmessung eine eindeutige Konzentrationsbestimmung möglich ist, in einem anderen Fall kann jedoch genauso der zu bestimmende Stoff überhaupt nicht vorhanden sein, und es absorbieren nur Störmkomponenten innerhalb des für den Stoff charakteristischen Spektralbereiches. Dies zeigt, daß eine fehlerfreie und zuverlässige Konzentrationsbestimmung mittels einer einzigen Absorptionsmessung in Gegenwart von Störabsorptionen nicht durchführbar ist.

Bei der Messung von Methankonzentrationen in einem Gasgemisch ist es bekannt, einen Absorptionswert am Maximum einer Methanabsorptionsbande zu bestimmen und diesen Wert zu vergleichen mit mindestens zwei außerhalb liegenden Absorptionswerten. Sobald dieses Verhältnis von einem für Methan vorbestimmten Verhältnis abweicht, wird bei diesem bekannten Verfahren erkannt, daß eine Störabsorption vorliegt; es wird dann keine Messung ausgeführt (DE-OS 33 34 264). Als Lichtquelle werden dabei bestimmte Laserdioden verwendet, die gerade in dem interessierenden Absorptionsbereich emittieren.

Es ist auch bekannt, bei der Messung des Wassergehaltes in Papier Absorptionen an verschiedenen Stellen zu messen und diese ins Verhältnis zu setzen, beispielsweise die Absorptionsbanden von freiem Wasser, von Zellulose sowie die Valenzschwingungen des Wassers und die CH-Valenzschwingung der Zellulose (DE-OS 29 10 673).

Schließlich ist es bei der fotometrischen Bestimmung von Konzentrationsverhältnissen in 2-Komponenten-Systemen bekannt, Absorptionen bei verschiedenen Wellenlängen zu bestimmen, die dann auf mathematisch äußerst komplizierte Weise Auskunft über die Konzentrationsverhältnisse der interessierenden Substanzen ergeben (DE-OS 23 43 097).

Es ist aus Anal. Chem. 1983, 55, S. 1440 - 1442 bekannt, die Konzentration von Formaldehyd unter Verwendung einer eine Deuteriumlampe enthaltenden Absorptionsvorrichtung zu messen.

Es sind jedoch bisher keine Verfahren der absorptionsspektroskopischen Bestimmung der Konzentration von Formaldehyd bekannt, die es erlauben, diesen Schadstoff, welcher in den Abgasen flüssiggas- oder alkoholbetriebener Kraftfahrzeuge, ölbetriebener Kraftfahrzeuge, von Holzfeuerungsanlagen und auch bei der Spanplattenfertigung mit Konzentrationen im ppm-Bereich auftritt, in einfacher Weise und zuverlässig zu bestimmen. Beim Auftreten des Formaldehyds sind als Störkomponenten stets Aceton, höhere Aldehyde, Benzol, Olefine und ähnliche mehratomige Moleküle vorhanden mit Atomzahlen, die größer sind als die des Formaldehyds. Die Absorptionsstruktur dieser Moleküle ist wesentlich breitbandiger als die von Formaldehyd, so daß dessen Absorptionsspektrum im allgemeinen stets durch weitere Störabsorptionen dieser Moleküle überlagert ist und folglich zumindest keine Konzentrationsmessung mit ausreichender Genauigkeit im ppm-Bereich erfolgen kann.

Auch das in der DE-PS 22 46 365 beschriebene Verfahren zur Elimination zusätzlicher Absorptionen durch Ölnebel und Ruß bei der absorptionsspektrometrischen Bestimmung der Konzentration von Stickoxiden in einem Gasgemisch liefert in dem oben beschriebenen Anwendungsfall keine zufriedenstellenden Resultate, da die Kompensation der Störabsorption durch Absorptionsmessung neben der charakteristischen Absorptionsbande des Stickoxids nicht zuverlässig genug ist und vor allem keine Aussage darüber ermöglicht, ob bei der charakteristischen Absorptionsbande des Stickoxids wirklich nur die Absorption dieses Moleküls oder nicht auch andere Störabsorptionen gemessen werden.

Weitere im Stand der Technik bekannte Verfahren, wie Massenspektroskopie und hochauflösende optische Spektroskopie sind entweder nicht genau genug oder erfordern einen Kostenaufwand, der eine kommerzielle Verwendung dieser Verfahren, beispielsweise als kontinuierliches Meßverfahren im industriellen Dauereinsatz, nicht erlaubt.

Es ist aus Technisches Messen 50, 1983, S. 417 - 422, bekannt, eine mit Stickstoff und Sauerstoff gefüllte Hohlkathodenlampe zu verwenden, um NO in einem Meßgas zu messen.

Der Erfindung liegt daher die Aufgabe zugrunde, eine Konzentrationsbestimmung von Formaldehyd in einem Medium mit Hilfe der Absorptionsspektroskopie mit einfachen Mitteln durchzuführen und zuverlässige Meßwerte mit der erforderlichen Genauigkeit zu liefern.

Diese Aufgabe wird erfindungsgemäß durch die im Anspruch 1 angegebenen Merkmale gelöst.

Für die Bestimmung der Absorption des Formaldehyds hat es sich als besonders vorteilhaft herausgestellt, als Strahlungsquelle zur Erzeugung der vom Formaldehyd absorbierten Strahlung eine Hohlkathodenlampe zu verwenden, die mit molekularem Stickstoff bei einem Druck unter ca. 2 mbar gefüllt ist. In dieser Hohlkathodenlampe wird eine Gasentladung mit einer Stromstärke von einigen Milliampère aufrechterhalten. Die dabei emittierte Strahlung enthält auch Strahlung aus den Elektronenschwingungsübergängen des Stickstoffmoleküls $C^3\pi_u \rightarrow B^3\pi_g$, dem sogenannten zweiten positiven System. Die Niveaus C und B sind dabei angeregte Zustände des Stickstoffs. Luftstickstoff im Grundzustand kann bei diesen Wellenlängen nicht absorbieren.

Besonders vorteilhafte Stickstoffbande sind dabei die Stickstoffbande des 0,0-Überganges (337,1 nm), des 3,3-Überganges (328,5 nm), des 4,4-Überganges (326,8 nm), des 1,0-Überganges (315,9 nm), des 2,1-Überganges (313,6 nm), des 3,2-Überganges (311,6 nm) und des 4,3-Überganges (310,6 nm). Diese fallen überraschend gut zusammen mit Absorptionsbanden des Formaldehyds bei 338,7 nm bzw. 328,8 nm bzw. 312,5 nm.

Die mit einer solchen molekularen Stickstoffemission erzeugte Quasi-Resonanzabsorption bei Formaldehyd hat den großen Vorteil einer hohen Empfindlichkeit bei der gleichzeitigen Verwendung mehrerer Wellenlängen. Diese Wellenlängen stehen dabei automatisch zur Verfügung, d.h. man kann in besonderen Fällen einen Monochromator sparen und mit einem Interferenzfilter beispielsweise den Meßbereich 295,0 nm bis 338,0 nm auswählen. Liegen dann dort Fremdgasabsorptionen mit bekannter und konstanter Querempfindlichkeit, so lassen sich diese durch anschließende Vergleichsmessungen rechnerisch berücksichtigen.

Ein weiterer großer Vorteil dieses Verfahrens zeigt sich außerdem darin, daß durch die Messung bei mehreren charakteristischen Absorptionsbanden des Formaldehyds bestimmt werden kann, ob dessen Absorptionsspektrum durch weitere Störabsorptionen überlagert ist. Dies kann entweder vor oder nach einer Bestimmung der Störabsorptionen durch Absorptionsmessung· in einem Wellenlängenbereich außerhalb einer charakteristischen Absorptionsbande erfolgen. Damit wird neben der höheren Genauigkeit der Absorptionsmessung, die dadurch bedingt ist, daß auf verschiedenen charakteristischen Absorptionsbanden gemessen wird, auch gleichzeitig sichergestellt ist, daß nur in dem Fall, in dem ausschließlich die Absorption des Formaldehyds gemessen wird, dessen Konzentration errechnet und angegeben wird und in allen anderen Fällen, in denen Überlagerungen mit anderen Störkomponenten nicht ausgeschlossen werden können, keine Konzentrationsbestimmung erfolgt, so daß unabhängig von der Tatsache, ob eine Messung und Subtraktion der Störabsorption erforderlich war und auch erfolgte oder nicht erforderlich war, stets sichergestellt ist, daß die gemessene Konzentration der tatsächlichen Konzentration des Formaldehyds entspricht.

Im Gegensatz zu bekannten Absorptionsmeßverfahren ist es bei diesem Verfahren nicht erforderlich, unbedingt das jeweilige Maximum der Formaldehydabsorption bei der Absorptionsmessung zu treffen, sondern wesentlich ist lediglich ein Messen bei festen Wellenlängen, deren Absorptionswerte verglichen werden. Diese Wellenlängen können auch auf der Flanke einer Absorptionslinie liegen.

Die Bestimmung der Störabsorption in einem einzigen Minimum des Absorptionsspektrums des Formaldehyds liefert meist sehr wenig zuverlässige Ergebnisse, so daß zur Elimination der Störabsorptionen mindestens zwei Absorptionsmessungen im Bereich verschiedener Absorptionsminima des Formaldehyds durchgeführt werden, die eine genauere quantitative Bestimmung der Störabsorptionen erlauben.

Bei den bisherigen Ausführungsbeispielen des Verfahrens war nicht angegeben, in welcher spektralen Lage die Störabsorptionsmessungen relativ zu den Absorptionsmessungen bei den charakteristischen Absorptionsbanden des Stoffes durchgeführt werden sollen. Zur möglichst exakten Bestimmung der im Bereich der charakteristischen Absorptionsbanden vorliegenden Störabsorptionen ist es daher von Vorteil, wenn die Messungen zur Bestimmung der Störabsorptionen in den den Absorptionsbanden benachbarten Absorptionsminima durchgeführt werden.

Eine weitere Steigerung der Genauigkeit der Konzentrationsbestimmung beim erfindungsgemäßen Verfahren wird erreicht, wenn die Lage der Absorptionsminima so gewählt wird, daß die charakteristischen Absorptionsbanden zwischen diesen liegen.

Bei allen Verfahren, bei welchen die Bestimmung der Störabsorption durch mindestens zwei Störabsorptionsmessungen erfolgt, ist es vorteilhaft, daß zur Subtraktion der Störabsorption aufgrund der Störabsorptionsmessungen ein lineares Störabsorptionsspektrum errechnet und von den gemessenen Absorptionen subtrahiert wird. Im Falle von mehr als zwei durchgeführten Störabsorptionsmessungen besteht die Möglichkeit, als Störabsorptionsspektrum ein Polynom höherer Ordnung zu errechnen und zu subtrahieren.

Bei den bisherigen Ausführungsbeispielen des Verfahrens war es immer erforderlich, daß das Störabsorptionsspektrum entweder im Bereich der charakteristischen Absorptionsbanden des Formaldehyds als konstant betrachtet oder über diesen Bereich linearisiert oder durch ein Polynom höherer Ordnung ersetzt werden konnte. Bei allen anderen Arten von Störabsorptionsspektren, d.h. beispielsweise bei solchen, die ebenfalls ein Maximum im Bereich der charakteristischen Absorptionsbanden aufweisen, wurde zwar durch das erfindungsgemäße Verfahren kein falscher Wert der Konzentration angegeben, es konnte aber entsprechend dem erfindungsgemäßen Verfahren auch kein Wert für die Konzentration des bekannten Stoffes ermittelt werden, da die Störabsorption nicht vollständig subtrahiert werden konnte, und somit das vorbekannte Verhältnis der Absorptionen bei den charakteristischen Absorptionsbanden auch nach Abzug der Störabsorption nicht erreicht wurde. Dies ist jedoch auch in einem solchen Fall möglich, vorausgesetzt, daß das Störabsorptionsspektrum vorbekannt ist und durch Messung der Störabsorption Absolutwerte von diesem Absorptionsspektrum bestimmt werden. In einem solchen Fall können also auch sehr komplex verlaufende Störabsorptionsspektren

3

subtrahiert und mit erfindungsgemäßen Verfahren ein genauer Wert der Konzentration des Formaldehyds errechnet werden.

Wie bereits beschrieben, liefert das erfindungsgemäße Verfahren in dem Fall, in dem ein Vergleich der vorbekannten Verhältnisse der Absorptionskoeffizienten mit den gemessenen Verhältnissen der Absorptionskoeffizienten keine ungefähre Übereinstimmung ergibt, keinen Wert für die Konzentration des Formaldehyds, so daß zwar die Angabe eines irreführenden Wertes vermieden wird, das Verfahren aber nicht in der Lage ist, dessen Konzentration zu ermitteln. Dieser Nachteil kann bei einer verbesserten Ausführungsform des erfindungsgemäßen Verfahrens dadurch vermieden werden, daß bei Nichterreichen des vorbekannten Verhältnisses nach Subtraktion der Störabsorptionen mindestens zwei weitere, in einem anderen Überlappungsbereich des Absorptionsspektrums des Formaldehyds mit dem Emissionsspektrum der Gasentladung liegende charakteristische Absorptionsbanden ausgewählt werden, bei denen das Verhältnis der Absorptionen bestimmt, mit dem vorbekannten Wert verglichen und gegebenenfalls die Störabsorption ermittelt und subtrahiert wird. Dabei kann die Störabsorption durch sämtliche vorher erläuterten Verfahren ermittelt und subtrahiert werden.

Selbst wenn dadurch eine Bestimmung der Konzentration nicht möglich ist, da auch hier die vorbekannten Verhältnisse zwischen den Absorptionskoeffizienten nicht erreichbar sind, d.h. es können immer mindestens zwei weitere charakteristische Absorptionsbanden ausgewählt und entsprechend dem erfindungsgemäßen Verfahren die Konzentration des bekannten Stoffes ermittelt oder nicht ermittelt werden.

Bei allen bisher erläuterten Ausführungsbeispielen des erfindungsgemäßen Verfahrens ist es von Vorteil, wenn die charakteristischen Absorptionsbanden in einem engen Spektralbereich liegen, so daß die Störabsorptionen in möglichst einfacher Weise subtrahiert werden können, da bei möglichst nahe beieinanderliegenden charakteristischen Absorptionsbanden sich das Störspektrum innerhalb dieses Spektralbereiches im allgemeinen nicht sehr stark ändert und somit auch das gemäß den bereits erläuterten Verfahrensschritten ermittelte Störspektrum weniger fehlerbehaftet ist.

Eine Steigerung der Lebensdauer der verwendeten Apparatur ist dadurch zu erreichen, daß die Absorptionsmessungen gepulst durchgeführt werden. Dieses Verfahren bietet auch noch den weiteren Vorteil, daß die gepulsten Absorptionsmessungen eine Steigerung der Empfindlichkeit zur Folge haben, da bei gepulsten Messungen auch noch ein üblicherweise bekanntes Lock-in-Verfahren zur Verbesserung des Signal-Rauschverhältnisses angewandt werden kann.

Weiterhin ist es Aufgabe der Erfindung, neben dem bereits beschriebenen Verfahren auch noch eine Vorrichtung zur Durchführung des Verfahrens zur Verfügung zu stellen.

Diese Aufgabe wird bei einer Vorrichtung mit den Merkmalen des Oberbegriffs des Anspruches 12 erfindungsgemäß dadurch gelöst, daß die Lichtquelle eine mit molekularem Stickstoff mit einem Druck von 2 mbar gefüllte Hohlkathodenlampe ist, in der eine Gasentladung mit einer Stromstärke von einigen Milliampère brennt, die ein Linienspektrum liefert, welches Spektrallinien im Wellenlängenbereich von charakteristischen Absorptionsbanden und Absorptionsminima des Formaldehyds umfaßt, und daß ein Rechnersystem zur Ermittlung von Verhältnissen zwischen Absorptionen charakteristischer Absorptionsbanden und zu deren Vergleich mit vorbekannten Verhältnissen der Absorptionskoeffizienten sowie zur Ermittlung und Subtraktion von Störabsorptionen vorgesehen ist.

Der Vorteil dieser erfindungsgemäßen Vorrichtung ist darin zu sehen, daß das Linienspektrum der speziellen Hohlkathodenlampe die Möglichkeit bietet, sowohl die charakteristischen Absorptionsbanden als auch die Ermittlung der Störabsorptionen gleichzeitig oder nahezu gleichzeitig durchzuführen.

Dazu kann beispielsweise vorgesehen sein, daß das wellenlängenselektive Element ein dispergierendes Element ist und die Einrichtung zum Messen der Intensität der elektromagnetischen Strahlung mehrere Kanäle hat, wobei jeder Kanal die Absorption bei einer der für das erfindungsgemäße Verfahren verwendeten Spektrallinien bestimmt, so daß die Intensitäten zur Ermittlung der Absorption im Bereich der charakteristischen Absorptionsbanden sowie die Intensitäten in einem oder mehreren der Absorptionsminima zur Bestimmung der Störabsorption gleichzeitig gemessen und dem Rechnersystem zur Verfügung gestellt werden können. Damit ist ohne Zeitverzögerung ständig eine kontinuierliche Messung möglich. Es ist aber auch denkbar, daß das wellenlängenselektive Element sehr schnell von einer ersten zu weiteren bei dem erfindungsgemäßen Verfahren verwendeten Spektrallinien schaltet und somit nur ein Detektor erforderlich ist, der dann die zu der jeweiligen Spektrallinie gehörenden Intensitätswerte mißt. Diese Art der Lichtquelle wird mit geringen Strömen oder auch gepulst betrieben. Sie besitzt daher eine sehr hohe Lebensdauer und liefert außerdem sehr scharfe Spektrallinien, die wiederum eine sehr billige und einfache Ausgestaltung des wellenlängenselektiven Elements erlauben.

Weitere Merkmale und Vorteile der Erfindung ergeben sich aus der folgenden Beschreibung sowie der beigefügten zeichnerischen Darstellung einer Ausführungsform der Erfindung. Es zeigen:

Figur 1 ein Ausführungsbeispiel der erfindungsgemäßen Vorrichtung und

Figur 2 ein Absorptionsspektrum von Formaldehyd mit überlagertem Emissionsspektrum einer mit molekularem Stickstoff gefüllten Hohlkathodenlampe.

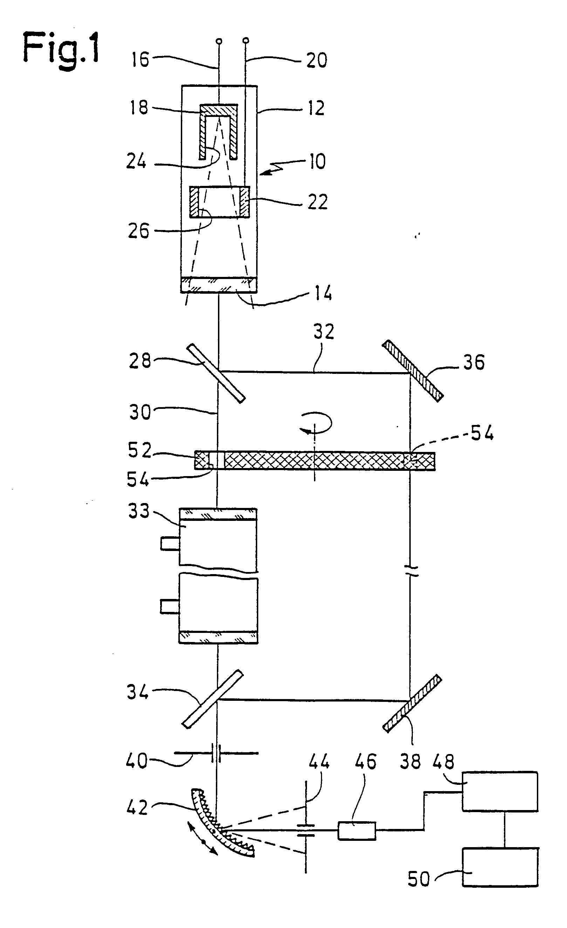

Figur 1 zeigt im einzelnen eine als Lichtquelle dienende Hohlkathodenlampe 10, welche ein Gehäuse 12 mit einem Quarzfenster 14 besitzt. Durch das Gehäuse 12 führt eine elektrische Leitung 16 zu einer Hohlkathode 18 sowie eine elektrische Leitung 20 zu einer Anode 22. Die Hohlkathode 18 besitzt üblicherweise eine Bohrung 24 mit einer Öffnung, welche in Richtung des Quarzfensters 14 weist, und die Anode 22 ist aus einem Ring geformt, der eine innere Öffnung 26 besitzt, die koaxial zur Bohrung 24 der Kathode 18 ausgerichtet ist.

Als Füllung des Gehäuses 12 wird bei dieser speziellen Hohlkathodenlampe molekularer Stickstoff verwendet, der einen Druck von unter zwei Millibar hat.

Die Hohlkathodenlampe 10 wird normalerweise mit einem stromstabilisierten Netzgerät, hier nicht zeichnerisch dargestellt, betrieben, so daß eine Gasentladung mit einer Stromstärke von einigen Milliampère zwischen Kathode und Anode stattfindet. Dabei wird eine Hohlkathode 18 aus Eisen, Chrom, Nickel, Kobalt verwendet.

Diese von der Hohlkathodenlampe 10 emittierte elektromagnetische Strahlung tritt durch das Quarzfenster 14 aus der Hohlkathodenlampe 10 aus und trifft auf einen Strahlteiler 28, welcher die Strahlung in einen sich in gerader Richtung weiter ausbreitenden Meßstrahl 30 und einen senkrecht dazu abzweigenden Referenzstrahl 32 aufteilt. Der Meßstrahl 30 trifft auf eine Absorptionszelle 33, die einen Stoff enthält, dessen Konzentration mit der erfindungsgemäßen Vorrichtung bestimmt werden soll. Nach Durchtritt durch die Absorptionszelle 33 erreicht der Meßstrahl 30 einen Strahlteiler 34 und passiert diesen in gerader Richtung. Der bei dem Strahlteiler 28 abgezweigte Referenzstrahl 32 trifft auf einen Spiegel 36, wird dort um 90° umgelenkt und verläuft parallel zum Meßstrahl 20 so lange, bis er wieder auf einen Spiegel 38 trifft und von diesem auf den Strahlteiler 34 reflektiert wird. Dieser lenkt den Referenzstrahl 32 in dieselbe Richtung wie den Meßstrahl 30, so daß beide im Anschluß an den Strahlteiler 34 einen Eintrittsspalt 40 passieren, auf ein wellenlängenselektives Element, in diesem Falle ein konkaves Gitter 42, treffen, welches als dispergierendes Element sowohl den Meßstrahl 30 wie auch den Referenzstrahl 32 spektral zerlegt und deren einzelne Komponenten in unterschiedlicher Weise ablenkt.

Die jeweils ausgewählten Komponenten sowohl des Meßstrahls 30 wie auch des Referenzstrahls 32 passieren einen Ausgangsspalt 44 und treffen auf einen Detektor 46. Bei dem Detektor 46 kann es sich um sämtliche handelsüblichen Strahlungsdetektoren, wie Fotomultiplier, Fotodioden und ähnliches, handeln. Der im Detektor 46 ermittelte Intensitätswert der jeweils ausgewählten Spektralkomponente wird von einem Rechnersystem 48 erfaßt, welches, wie später beschrieben wird, die jeweilige Konzentration des Stoffes in der Absorptionszelle 33 errechnet und den Wert einer Anzeigevorrichtung 50 zur Verfügung stellt.

Damit zwischen einer Intensitätsmessung des Meßstrahls 30 und des Referenzstrahls 32 hin- und hergeschaltet werden kann, passieren die beiden eine vor der Absorptionszelle 33 angeordnete Sektorenblende 52, auch Chopper genannt, welche üblicherweise eine kreisrunde Scheibe darstellt, die mit Öffnungen 54 versehen ist, die so auf der Scheibe angeordnet sind, daß sie entweder den Meßstrahl 30 oder den Referenzstrahl 32 passieren lassen. Durch Drehen dieser Sektorenblende kann somit alternierend entweder der Meßstrahl 30 oder der Referenzstrahl 32 freigegeben werden.

Zur Intensitätsmessung der verschiedenen, für das erfindungsgemäße Verfahren verwendeten Spektrallinien ist das Gitter 42 drehbar gelagert, so daß es jeweils in solche Stellungen verdreht werden kann, in denen die gewünschte Spektrallinie den Ausgangsspalt 44 passiert.

Die Absorptionsmessung mit der in Figur 1 dargestellten Vorrichtung erfolgt folgendermaßen:

Das von der Hohlkathodenlampe 10 emittierte Linienspektrum durchtritt einmal als Meßstrahl 30 die Absorptionszelle 33 und trifft auf das Gitter 42, das den Meßstrahl 30 in den einzelnen Spektrallinien entsprechende Strahlen zerlegt. Das Gitter 42 wird dabei so eingestellt, daß die erste Spektrallinie, die untersucht werden soll, den Ausgangsspalt 44 passiert und auf den Detektor 46 trifft. Der Detektor 46 mißt nun die Intensität dieser Spektrallinie. Wird nun die Sektorenblende 52 so verdreht, daß der Meßstrahl 30 nicht mehr durch eine der Öffnungen 5 hindurchtreten kann, so gibt diese andererseits den Referenzstrahl 32 frei, so daß dieser anstelle des Meßstrahls 30 auf das Gitter 42 trifft und dort in dieselben Spektralkomponenten zerlegt wird. Da das Gitter 42 so gedreht ist, daß die erste zu untersuchende Spektrallinie den Ausgangsspalt 44 passiert, trifft auch diese auf den Detektor 46, wobei ihre Intensität dort gemessen wird. Eine ständige Drehung der Sektorenblende 52 ermöglicht somit alternierend die Messung der Intensität einer bestimmten, von der Hohlkathodenlampe 10 emittierten Spektrallinie, wobei ein dieser Spektrallinie entsprechender Intensitätswert des Meßstrahls 30 durch den Wert des Referenzstrahls 32 dividiert wird. Dazu muß selbstverständlich die Einrichtung zur Messung der Intensität mit der Drehung der Sektorenblende 52 synchronisiert sein, so daß jeweils erkannt werden kann, ob die Intensität des Meßstrahls 30 oder die des Referenzstrahls 32 gemessen wird.

Nach der Ermittlung der Absorption bei der ersten Spektrallinie wird das Gitter 42 so verdreht, daß die zweite Spektrallinie den Ausgangsspalt 44 passiert und auf den Detektor 46 trifft. In analoger Weise wird die Absorption bei der zweiten Spektrallinie bestimmt. Da die Absorptionsmessungen sehr schnell erfolgen können, ist es nicht notwendig, das Gitter 42 jeweils um diskrete Winkel zu verdrehen, sondern es kann ein Schwinggitter Verwendung finden, so daß ständig die Spektrallinien aufeinanderfolgend den Ausgangsspalt 44 passieren. Selbstverständlich muß auch ein solches Schwinggitter mit der Einrichtung zur Messung der Intensitäten synchronisiert sein, so daß die einzelnen Intensitätswerte mit den einzelnen Spektrallinien korreliert werden können.

Bei einem weiteren bevorzugten Ausführungsbeispiel der erfindungsgemäßen Vorrichtung ist vorgesehen, daß der Ausgangsspalt 44 und der Detektor 46 durch eine Reihe nebeneinander angeordneter Detektoren ersetzt sind. Diese sind jeweils so angeordnet, daß sie jeweils die Intensität einer der Spektrallinien messen, in welche das Gitter 42 die elektromagnetische Strahlung der Hohlkathodenlampe 10 zerlegt, und die für das erfindungsgemäße Verfahren, wie später beschrieben wird, relevant sind. Dadurch entfällt die Notwendigkeit, das Gitter 42 ständig hin- und herzudrehen, und es können die Intensitäten sämtlicher relevanter Spektrallinien gleichzeitig gemessen werden.

Eine weitere Modifikation wäre, den in Figur 1 gezeigten Ausgangsspalt 44 durch eine Vielzahl von Spalten zu ersetzen, die jeweils eine der für das erfindungsgemäße Verfahren notwendigen Spektrallinien passieren lassen, und die Ausgangsspalte jeweils mit einem Lichtleiter zu versehen, welcher das Licht zu einem Detektor führt, wobei zwischen den verschiedenen Lichtleitern, beispielsweise durch einen Schwingspiegel, ständig hin- und hergeschaltet wird, so daß der Detektor aufeinanderfolgend die Intensitäten des Lichtes aus den einzelnen Lichtleitern mißt.

Weiterhin kann die in Figur 1 dargestellte Ausführungsform der erfindungsgemäßen Vorrichtung dadurch vereinfacht werden, daß der Referenzstrahl 32 entfällt, so daß auch die Sektorenblende 52, die Strahlteiler 28 und 34 sowie die Spiegel 36 und 38 nicht notwendig sind. Diese vereinfachte Ausführungsform ist vor allem bei Vorrichtungen ausreichend, bei denen keine sehr hohe Meßgenauigkeit erforderlich ist, oder wenn sehr hohe Konzentrationen des Stoffes gemessen werden sollen. In diesem Falle wird die Intensität der einzelnen von der Hohlkathode 10 emittierten Spektrallinien vor Einleiten des Stoffes in die Absorptionszelle 33 gemessen und in dem Rechnersystem 48 abgespeichert.

Wenn sehr geringe Konzentrationen des Stoffes bestimmt werden sollen, ist es erforderlich, daß der Meßstrahl 30 über eine möglichst große Distanz innerhalb der Absorptionszelle 33 verläuft, so daß für die Absorption der Spektrallinien eine möglichst große Weglänge zur Verfügung steht. In einem solchen Fall kann anstelle einer einfachen Absorptionszelle 33 auch eine solche verwendet werden, bei welcher der Meßstrahl 30 innerhalb der Absorptionszelle 33 mehrfach hin- und herreflektiert wird und somit innerhalb der Absorptionszelle 33 eine Wegstrecke zurücklegt, die ein Vielfaches einer Länge dieser Absorptionszelle 33 beträgt. Des weiteren können in diesem Fall sämtliche Methoden zur Verbesserung des Signal-Rauschverhältnisses, wie Mittelung über längere Zeit, Lock-in-Technik etc., Verwendung finden.

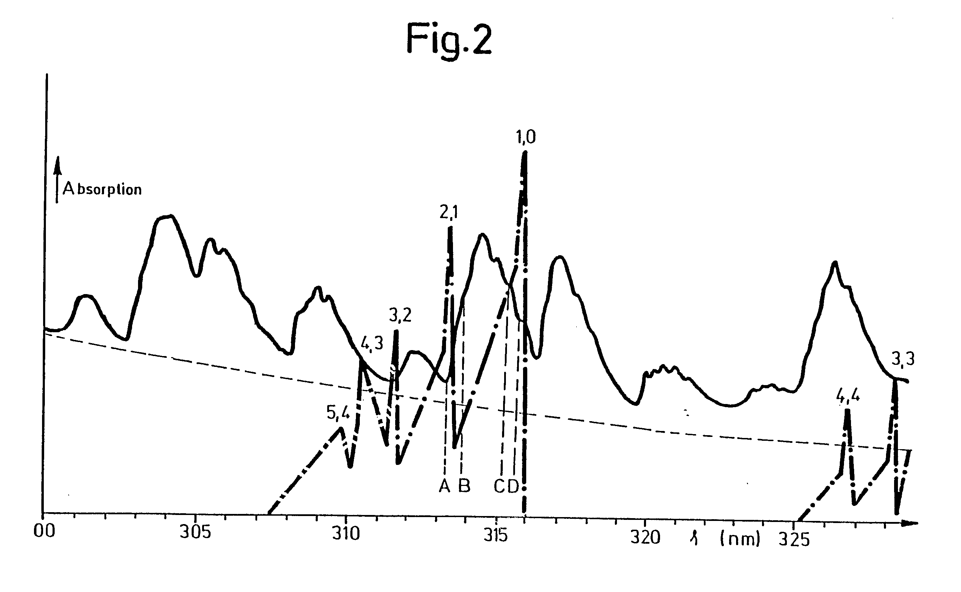

In Figur 2 ist auf ein Absorptionsspektrum von Formaldehyd (ausgezogene Kurve) Bezug genommen, das eine Überlagerung des tatsächlichen Absorptionsspektrums von Formaldehyd mit einem Untergrund oder einer Störabsorption (gestrichelte Kurve) darstellt. Zusätzlich ist strichpunktiert ein Emissionsspektrum der speziellen Hohlkathodenlampe 10 dargestellt. Figur 2 zeigt dabei lediglich einen Teil des für die Messung verwendbaren Spektralbereiches.

Da der Verlauf des Absorptionsspektrums von Formaldehyd für die Durchführung des erfindungsgemäßen Verfahrens bekannt ist, werden bereits vor der Messung vier Spektrallinien, bezeichnet mit A, B, C und D ausgewählt, deren spektrale Lage in Figur 2 angegeben ist. Die Linien A und die Linien D liegen im Bereich von Absorptionsminima des Formaldehyds und dienen zur Bestimmung der Störabsorption, während die Linien B und die Linie C im Bereich von Absorptionsbanden des Formaldehyds liegen.

Zunächst wird die Absorption bei B und C gemessen, das Verhältnis B zu C gebildet und mit dem bereits bekannten Wert verglichen, der bei einem störabsorptionsfreien Eichspektrum ermittelt wurde. Wie Figur 2 zeigt, stimmt das Verhältnis B zu C sicherlich nicht mit dem Wert des Eichspektrums überein, da in diesem Spektralbereich ein sehr starker Untergrund aufgrund einer Störsbsorption vorliegt. Dies wird bei dem Verfahren erkannt und deshalb wird zunächst im Bereich der Spektrallinie A die Störabsorption bestimmt. Diese kann beispielsweise als konstanter Untergrund von den gemessenen Absorptionswerten bei B und C abgezogen werden, so daß mit den korrigierten Absorptionswerten bei B und C das Verhältnis B zu C gebildet und mit dem des Eichspektrum verglichen wird. Ist eine Übereinstimmung festzustellen, so wird aufgrund der Absolutwerte der Absorption, d.h. der Absolutwerte der optischen Dichte bei B und C gemäß dem Lambert-Beer'schen Gesetz die Konzentration des Stoffes bestimmt.

Bei dem in Figur 2 dargestellten Absorptionsspektrum ist jedoch die Subtraktion einer Konstanten, bei A gemessenen Störabsorption von den bei B und C gemessenen Absorptionen nicht genau genug, so daß zusätzlich noch die Störabsorption bei D gemessen und dieser Wert zur Berechnung einer zwischen A und B linearisierten Störabsorption verwendet wird. Dabei ist es unerheblich, wenn bei D noch teilweise auch eine Absorption des Formaldehyds vorliegt, da diese aufgrund des Eichspektrums bekannt ist und somit bei der Berechnung der Störabsorption berücksichtigt werden kann.

Die durch Linearisierung der Werte der Störabsorption an den Stellen A und B ermittelte Störabsorption bei B und C wird nun von den gemessenen Absorptionswerten bei B und C abgezogen. Damit entsprechen die Absorptionen bei B und C denen des tatsächlichen Absorptionsspektrums von Formaldehyd, so daß auch das Verhältnis B zu C mit dem aufgrund des Eichspektrums bekannten Verhältnis übereinstimmt und die Konzentration des Formaldehyds mit ausreichender Genauigkeit angegeben werden kann.

Sollte trotz Subtraktion des Störabsorptionsspektrums das Verhältnis B zu C nicht übereinstimmen, so wird entsprechend dem erfindungsgemäßen Verfahren entweder kein Wert für die Konzentration berechnet, so daß ausgeschlossen ist, daß fehlerhafte Konzentrationswerte angegeben werden, oder es wird dasselbe Verfahren im Bereich einer weiteren Absorptionsbande und deren Nebenminima durchgeführt, wobei ebenfalls erst ein Konzentrationswert errechnet und angegeben wird, wenn das gemessene Verhältnis mit dem des bekannten Eichspektrums übereinstimmt.

Eine Abschätzung der mit dem erfindungsgemäßen Verfahren meßbaren Konzentrationen von Formaldehyd ergibt, daß bei einem Absorptionskoeffizienten von 8/cm im Bereich von B und einer Weglänge des Meßstrahls 30 in der Absorptionszelle 32 von ungefähr 60 cm der Meßstrahl 30 entsprechend der unten stehenden Tabelle abgeschwächt wird.

| Konzentration $H_2CO$ in der Absorptionszelle 32 | Lichtschwächung $\Delta$ I/I des Meßstrahles 30 |
|---|---|
| $c = 10^{-3}$ (1000 ppm) | 38 % |
| $c = 10^{-4}$ (100 ppm) | 4,7 % |
| $c = 10^{-6}$ (1 ppm) | 0,5 %. |

Da selbst noch Licht-Schwächungen im Bereich von 0,5% mit den heute üblichen Nachweistechniken gut meßbar sind, erlaubt das erfindungsgemäße Verfahren Messungen von Formaldehyd im ppm-Bereich, so daß es die für die eingangs genannten Anwendungsbereiche erforderliche Genauigkeit besitzt.

## Patentansprüche

1. Verfahren zur Bestimmung der Konzentration von Formaldehyd in einem Medium mittels einer Absorptionsmessung im Bereich mindestens einer charakterischen Absorptionsbande des Formaldehyds und gegebenenfalls der Subtraktion einer Störabsorption mit folgenden Schritten:

man betreibt eine Entladung zur Erzeugung der Strahlung für die Absorptionsmessung in einer Hohlkathodenlampe mit einer Füllung aus molekularem Stickstoff bei einem Druck unter 2 mbar bei einer Stromstärke von einigen Milliampère,

man führt die Absorptionsmessung bei mindestens zwei unterschiedlichen, charakteristischen Absorptionsbanden des Formaldehyds mit in einem vorbekannten Verhältnis zueinander stehenden Absorptionskoeffizienten durch, die im Bereich von Emissionen der Gasentladung in der Hohlkathodenlampe liegen,

man bildet das Verhältnis der bei den charakteristischen Absorptionsbanden gemessenen tatsächlichen Absorptionen und vergleicht dieses mit dem vorbekannten Verhältnis, man bestimmt bei Nichtübereinstimmung des vorbekannten Verhältnisses und des gemessenen Verhältnisses die Störabsorptionen und zieht diese von den gemessenen Absorptionen ab

und man bestimmt bei Ermittlung des vorbekannten Verhältnisses aus den gemessenen Absorptionswerten bzw. bei Abzug von Störabsoptionen aus den um die Störabsorption reduzierten Absorptionswert die Konzentration des Formaldehyds.

2. Verfahren nach Anspruch 1, dadurch gekennzeichnet, daß die Meßabsorptionslinien des Formaldehyds in den Überlappungsbereichen mit den Elektronenschwingungsübergängen des Stickstoffmoleküls $C^3\pi_u \rightarrow B^3\pi_g$, d.h. 2 positives System liegen insbesondere im Bereich des 0,0-Überganges bei 337,1nm, des 3,3-Überganges bei 328,5 nm, des 4,4-Überganges bei 326.8 nm, des 1,0 Überganges bei 315,9 nm, des 2,1-Überganges bei 313,6 nm, des 3,2-Überganges bei 311,6 nm und des 4,3-Überganges bei 310,6 nm.

3. Verfahren nach Anspruch 1 oder 2, dadurch gekennzeichnet, daß zur Elimination der Störabsorption mindestens zwei Absorptionsmessungen im Bereich verschiedener Absorptionsminima des Formaldehyds durchgeführt werden.

4. Verfahren nach Anspruch 2, dadurch gekennzeichnet, daß die Messungen zur Bestimmung der Störabsorptionen in den charakteristischen Absorptionsbanden benachbarten Absorptionsminima durchgeführt werden.

5. Verfahren nach Anspruch 4, dadurch gekennzeichnet, daß die Lage der Absorptionsminima so gewählt wird, daß die charakteristischen Absorptionsbanden zwischen diesen liegen.

6. Verfahren nach einem der Ansprüche 3 bis 5, dadurch gekennzeichnet, daß weitere Störabsorptionsmessungen durchgeführt werden.

7. Verfahren nach einem der Ansprüche 3 bis 6, dadurch gekennzeichnet, daß zur Subtraktion der Störabsorption aufgrund der Störabsorptionsmessungen ein lineares Störabsorptionsspektrum errechnet und von den gemessenen Absorptionen subtrahiert wird.

8. Verfahren nach einem der Ansprüche 3 bis 6, dadurch gekennzeichnet, daß als Störabsorptionsspektrum ein Polynom höherer Ordnung errechnet und subtrahiert wird.

9. Verfahren nach einem der Ansprüche 1 bis 6, dadurch gekennzeichnet, daß das Störabsorptionsspektrum vorbekannt ist und durch Messung der Störabsorption dessen Absolutwerte bestimmt werden.

10. Verfahren nach einem der Ansprüche 1 bis 9, dadurch gekennzeichnet, daß bei Nichterreichen des vorbekannten Verhältnisses nach Subtraktion der Störabsorption mindestens zwei weitere, in einem anderen Überlappungsbebereich des Absorptionsspektrums des Formaldehyds mit dem Emissionsspektrum des Gasentladung liegende charakteristische Absorptionsbanden ausgewählt werden, bei denen das Verhältnis der Absorptionen bestimmt, mit dem vorbekannten Wert verglichen und gegebenenfalls die Störabsorption ermittelt und subtrahiert wird.

11. Verfahren nach einem der Ansprüche 1 bis 10, dadurch gekennzeichnet, daß die Absorptionsmessungen gepulst durchgeführt werden.

12. Vorrichtung zur Durchführung des Verfahrens nach einem der Ansprüche 1 bis 11 mit einer Lichtquelle zur Erzeugung elektromagnetischer Strahlung, mit einem im Wege der elektromagnetischen Strahlung angeordneten wellenlängenselektiven Element sowie einer ebenfalls in diesem Wege angeordneten, das Formaldehyd beinhaltenden Absorptionszelle und mit einer Einrichtung zum Messen einer Intensität der elektromagnetischen Strahlung nach Durchtritt durch die Absorptionszelle, dadurch gekennzeichnet, daß die Lichtquelle eine mit molekularem Stickstoff mit einem Druck unter 2 mbar gefüllte Hohlkathodenlampe (10) ist, in der eine Gasentladung mit einer Stromstärke von einigen Milliampere brennt, die ein Linienspektrum liefert, welches Spektrallinien im Wellenlängenbereich von charakteristischen Absorptionsbanden (B und C) und Absorptionsminima (A, D) des Formaldehydes umfaßt, und daß ein Rechnersystem (48) zur Ermittlung von Verhältnissen zwischen Absorptionen charakteristischer Absorptionsbanden (B, C) und zu deren Vergleich mit vorbekannten Verhältnissen der Absorptionskoeffizienten sowie zur Ermittlung und Subtraktion von Störabsorptionen vorgesehen ist.

## Revendications

1. Procédé de détermination de la concentration du formaldéhyde dans un milieu à l'aide d'une mesure d'absorption dans le domaine d'au moins une bande d'absorption caractéristique du formaldéhyde et éventuellement à l'aide de la soustraction d'une absorption parasite, qui présente dans les étapes suivantes:

on réalise une décharge pour produire le faisceau pour la mesure d'absorption dans une lampe à cathode creuse remplie d'azote moléculaire sous une pression inférieure à 2 mbar avec une intensité de quelques milliampères,

on réalise la mesure d'absorption pour au moins deux bandes d'absorption caractéristiques, différentes, du formaldéhyde avec des coefficients d'absorption présentant entre eux un rapport connu au préalable, qui se situent dans le domaine des émissions dans la décharge dans le gaz de la lampe à cathode creuse,

on forme le rapport des absorptions proprement dites mesurées dans les bandes d'absorption caractéristiques et on compare ce rapport avec le rapport connu au préalable, dans le cas où le rapport connu au préalable et le rapport mesuré ne coïncident pas, on détermine les absorptions parasites et on les soustrait des absorptions mesurées, et

on détermine la concentration du formaldéhyde en déterminant le rapport connu au préalable à partir des valeurs d'absorption mesurées ou en soustrayant les absorptions parasites des valeurs de l'absorption diminuées de l'absorption parasite.

2. Procédé selon la revendication 1, caractérisé en ce que les raies d'absorption de mesure du formaldéhyde sont situées dans les domaines de chevauchement avec les transitions d'oscillation électronique de la molécule d'azote $C^3\,\pi_u{\rightarrow}B^3\,\pi_g$, c'est-à-dire le deuxième système positif, en particulier dans le domaine de la transition 0,0 à 337,1 nm, de la transition 3,3 à 328,5 nm, de la transition 4,4 à 326,8 nm, de la transition 1,0 à 315,9 nm, de la transition 2,1 à 313,6 nm, de la transition 3,2 à 311,6 nm et de la transition 4,3 à 310,6 nm.

3. Procédé selon la revendication 1 ou 2, caractérisé en ce que pour éliminer l'absorption parasite on réalise au moins deux mesures d'absorption dans le domaine de différents minimas d'absorption du formaldéhyde.

4. Procédé selon la revendication 2, caractérisé en ce que les mesures pour la détermination des absorptions parasites sont effectuées dans les bandes d'absorption caractéristiques de minimas d'absorption voisins.

5. Procédé selon la revendication 4, caractérisé en ce que la position des minimas d'absorption est choisie de telle façon que les bandes d'absorption caractéristiques soient situées entre ceux-ci.

6. Procédé selon l'une des revendications 3 à 5, caractérisé en ce que l'on réalise d'autres mesures d'absorption parasite.

7. Procédé selon l'une des revendications 3 à 6, caractérisé en ce que, pour la soustraction de l'absorption parasite sur la base des mesures d'absorption parasite, on calcule un spectre d'absorption parasite linéaire que l'on soustrait des absorptions mesurées.

8. Procédé selon l'une des revendications 3 à 6, caractérisé en ce qu'en tant que spectre d'absorption parasite on calcule et soustrait un polynôme d'ordre plus élevé.

9. Procédé selon l'une des revendications 1 à 6, caractérisé en ce que le spectre d'absorption parasite est connu au préalable et que ses valeurs absolues sont déterminées par mesure de l'absorption parasite.

10. Procédé selon l'une des revendications 1 à 9, caractérisé en ce que, dans le cas où le rapport connu au préalable n'est pas atteint après soustraction de l'absorption parasite, on choisit au moins deux autres bandes d'absorption caractéristiques situées dans un autre domaine de chevauchement du spectre d'absorption du formaldéhyde Par le spectre d'émission de la décharge dans le gaz, dans lesquelles on détermine le rapport des absorptions, on le compare avec la valeur connue au préalable et on détermine et soustrait éventuellement l'absorption parasite.

**EP 0 243 375 B1**

11. Procédé selon l'une des revendications 1 à 10, caractérisé en ce que les mesures d'absorption sont réalisées de façon pulsée.

12. Dispositif pour la mise en oeuvre du procédé selon l'une des revendications 1 à 11 avec une source lumineuse pour la production d'un faisceau électromagnétique, avec un élément sélectif vis-à-vis des longueurs d'onde disposé sur le trajet du faisceau électromagnétique, de même qu'une cellule d'absorption contenant du formaldéhyde disposée de même sur ce trajet et avec un dispositif pour mesurer un intensité du faisceau électromagnétique après la traversée de la cellule d'absorption, caractérisé en ce que la source lumineuse est une lampe à cathode creuse (10) remplie d'azote moléculaire sous une pression inférieure à 2 mbar, dans laquelle se produit une décharge dans le gaz avec une intensité de quelques milliampères qui délivre un spectre de raies qui comprend des raies spectrales dans le domaine de longueurs d'onde des bandes d'absorption caractéristiques (B et C) et des minimas d'absorption (A, D) du formaldéhyde, et en ce qu'il est prévu un système de calcul (48) pour déterminer les rapports entre les absorptions des bandes d'absorption caractéristiques (B et C) et pour les comparer avec des rapports connus au préalable des coefficients d'absorption ainsi que pour déterminer et soustraire les absorptions parasites.

## Claims

1. Process for determining the concentration of formaldehyde in a medium by means of an absorption measurement in the range of at least one characteristic absorption band of formaldehyde, and if necessary, the subtraction of a parasitic absorption, with the following steps:

for producing the radiation for the absorption measurement, a discharge is performed in a hollow cathode lamp with a filling of molecular nitrogen, at a pressure under 2 mbar, at a current intensity of a few milliampères,

the absorption measurement is performed in at least two different characteristic absorption bands of formaldehyde, with absorption coefficients which stand in a previously known ratio to one another and which lie within the range of emissions of the gas discharge in the hollow cathode lamp,

the ratio of the actual absorptions measured in the characteristic absorption bands is determined and is compared with the previously known ratio,

if the previously known ratio and the measured ratio do not correspond, the parasitic absorptions are determined and are subtracted from the measured absorptions,

and the formaldehyde concentration is determined, in the case of ascertainment of the previously known ratio, from the measured absorption values or, in the case of the subtraction of parasitic absorptions, from the absorption value which is reduced by the amount of the parasitic absorption.

2. Process according to claim 1, characterised in that the measurement absorption lines of the formaldehyde lie within the overlapping ranges with the electron oscillation transitions of the nitrogen molecule $C^3\pi_u \rightarrow B^3\pi_g$, i.e. second positive system, in particular in the range of the 0,0-transition at 337.1 nm, of the 3,3-transition at 328.5 nm, of the 4,4-transition at 326.8 nm, of the 1,0-transition at 315.9 nm, of the 2,1-transition at 313.6 nm, of the 3,2-transition at 311.6 nm, and of the 4,3-transition at 310.6 nm.

3. Process according to claim 1 or 2, characterised in that for elimination of the parasitic absorption, at least two absorption measurements are performed within the range of different absorption minima of formaldehyde.

4. Process according to claim 2, characterised in that the measurements for determining the parasitic absorptions are performed in the absorption minima which are adjacent to the characteristic absorption bands.

5. Process according to claim 4, characterised in that the position of the absorption minima is selected such that the characteristic absorption bands lie betwen them.

6. Process according to any one of the claims 3 to 5, characterised in that further parasitic absorption measurements are performed.

7. Process according to any one of the claims 3 to 6, characterised in that for the subtraction of the parasitic absorption on the basis of the parasitic absorption measurements, a linear parasitic absorption spectrum is calculated and is subtracted from the measured absorptions.

8. Process according to any one of the claims 3 to 6, characterised in that as parasitic absorption spectrum, a polynomial of relatively high order is calculated and is subtracted.

9. Process according to any one of the claims 1 to 6, characterised in that the parasitic absorption spectrum is previously known, and is determined by measuring the parasitic absorption of its absolute values.

10. Process according to any one of the claims 1 to 9, characterised in that if the previously known ratio is not reached after subtracting the parasitic absorption, at least two further characteristic absorption bands are selected, which lie within another overlapping range of the absorption spectrum of formaldehyde and the emission spectrum of the gas discharge, wherein the ratio of the absorptions is determined, is compared with the previously known value, and if necessary, the parasitic absorption is ascertained and is subtracted.

9

11. Process according to any one of the claims 1 to 10, characterised in that the absorption measurements are performed in pulsed manner.

12. Apparatus for operating the process according to any one of the claims 1 to 11, with a light source for the production of electromagnetic radiation, with a wavelength-selective element which is arranged in the path of the electromagnetic radiation, and also with an absorption cell which is likewise arranged in this path and which contains the formaldehyde; and with an installation for measuring an intensity of the electromagnetic radiation after passage through the absorption cell, characterised in that the light source is a hollow cathode lamp (10) filled with molecular nitrogen at a pressure under 2 mbar, wherein a gas discharge burns at a current intensity of a few milliampères, and which provides a line spectrum which comprises spectral lines within the wavelength range of characteristic absorption bands (B and C) and absorption minima (A, D) of formaldehyde; and in that a calculating system (48) is provided, for ascertaining ratios between absorptions of characteristic absorption bands (B, C) and for comparing them with previously known ratios of the absorption coefficients, and also for ascertaining and subtracting parasitic absorptions.

# Fig.1

Fig.2